Europäisches Patentamt

European Patent Office

Office européen des brevets

(11) Veröffentlichungsnummer: **0 364 821**
**A2**

## EUROPÄISCHE PATENTANMELDUNG

(21) Anmeldenummer: **89118471.5**

(22) Anmeldetag: **05.10.89**

(51) Int. Cl.⁵: **B23B 31/26**

(30) Priorität: **21.10.88 DE 3835879**

(43) Veröffentlichungstag der Anmeldung:
**25.04.90 Patentblatt 90/17**

(84) Benannte Vertragsstaaten:
**AT DE FR GB IT**

(71) Anmelder: **Krupp Widia GmbH**
**Münchener Str. 90**
**D-4300 Essen 1(DE)**

(72) Erfinder: **von Haas, Rainer, Dipl.-Ing.**
**Krümmelstrasse 26**
**D-2054 Geesthacht(DE)**
Erfinder: **Jester, Willi**
**Langenbochumerstrasse 427**
**D-4352 Herten(DE)**

(74) Vertreter: **Vomberg, Friedhelm, Dipl.-Phys.**
**Graf-Recke-Strasse 231**
**D-4000 Düsseldorf 1(DE)**

(54) **Werkzeugadapter für eine Werkzeugmaschinenspindel.**

(57) Die Erfindung betrifft einen Werkzeugadapter für eine Werkzeugmaschinenspindel mit einer kegeligen Aufnahmebohrung, in der ein eine Spannzange und ein Ausstoßzapfen aufweisende Spannvorrichtung angeordnet ist.

Um den gesamten Spannhub der Spannzange (13) auf die Spannstange (20) bzw. deren Kopf (23) übertragen zu können, besitzt der Adapter (16) an dem verjüngten Ende des Kegelschaftes (17) parallel zur Spannstange (20) angeordnete federnde Zungen (22), welche die Spannzange (13) über dem Kopf (23) der Spannstange (20) des Adapters (16) geschlossen halten.

Fig. 1

## Werkzeugadapter für eine Werkzeugmaschinenspindel

Die Erfindung betrifft einen Werkzeugadapter für eine Werkzeugmaschinenspindel mit einer kegeligen Aufnahmebohrung, z.B. nach DIN 2079, und mit einer in der Spindel axial entgegen einer Federkraft verschiebbaren Zugstange, die eine am inneren Ende der Aufnahmebohrung vorgesehene Spannzange und einen Ausstoßzapfen trägt, wobei der Werkzeugadapter einen der kegeligen Spindelaufnahmebohrung angepaßten Kegelschaft und einen hierzu koaxialen, an der Stirnfläche der Spindel andrückbaren Tragkörper aufweist und mit Angriffsflächen für eine Transportvorrichtung eines automatischen Werkzeugwechslers und einer Werkzeugkopfaufnahme sowie Werkzeugkopfspannmitteln ausgestattet ist.

Bei Bohr-, Fräs- oder ähnlichen Werkzeugmaschinen größerer Bauart weist die Werkzeugmaschinenspindel eine möglichst große konische Spindelaufnahmebohrung zur Aufnahme eines Werkzeuges mit einem entsprechend angepaßtem Kegelschaft, beispielsweise einem ISO-60-Steilkegel, auf. Will man nunmehr auf derselben Maschine in die Spindel ein Werkzeug mit einem kleineren, z.B. einem ISO-50-Steilkegel einspannen, so ist hierzu ein Adapter erforderlich. Im übrigen ist es in der Werkzeugmaschinentechnik inzwischen üblich geworden, in sog. Bearbeitungszentren Werkzeugköpfe automatisch zu wechseln, wozu es ebenfalls von Fall zu Fall erforderlich ist, einen Werkzeugadapter zur Aufnahme der modularen Werkzeuge in die Werkzeugmaschinenspindel einzusetzen. Die hierzu notwendigen Spannsysteme sind im Prinzip nach dem Stand der Technik bekannt. So wird beispielsweise im Aachener Werkzeugmaschinen-Kolloquium 1984, 7./ 8. Juni 1984, Seite 165, Bild 24, unten ein Werkzeugadapter dargestellt, dessen erster Anzugsbolzen, an welchem die in der Spindel vorgesehene erste Spannzange angreift, in einer am freien, verjüngten Ende des Kegelschaftes vorgesehenen Lagerbüchse axial verschiebbar gelagert ist. In der Lagerbüchse ist ein Tellerfederpaket angeordnet, welches eine mit dem Anzugsbolzen verbundene, im Tragkörper vorgesehene zweite Spannzange und deren Ausstoßzapfen in Richtung auf die konische Werkzeugaufnahmebohrung drückt. Das Tellerfederpaket dient einerseits zum Öffnen der zweiten Spannzange und andererseits auch zum Lösen eines in der Werkzeugaufnahmebohrung festsitzenden Werkzeugkegelschaftes. Wegen der extrem großen Länge der Vorrichtung sind, z.B. in der DE-OS 24 19 896 andere Verriegelungsmechanismen vorgeschlagen worden. An dem dort beschriebenen Spindelkopf sind mehrere Verriegelungsglieder in entsprechenden Längsnuten radial und axial beweglich gelagert. Jedes Verriegelungsglied weist ein hakenförmigen Kopf auf und wird durch Federkraft radial nach außen in die Verriegelungsstellung gedrückt.

Eine weitere Ausführungsform wird in der DE-PS 35 06 901 vorgeschlagen, wobei an dem Tragkörper eines Adapters mehrere Verriegelungsglieder vorgesehen sind, mit denen der Werkzeugadapter beim Einsetzen in die Spindel mittels der Greiferzange eines Werkzeugwechslers selbsttätig mit dem Spindelkopf verriegelt wird. Dies erfolgt dadurch, daß die Greiferzange beim Erfassen des Werkzeugadapters die Verriegelungsglieder entgegen Federkraft in ihre Entriegelungsstellung bringt und beim Einsetzen des Kegelschaftes in Spindelaufnahmebohrung die Verriegelungsglieder in die Verriegelungsausnehmungen im Spindelkopf eintreten.

Der Erfindung liegt die Aufgabe zugrunde, einen Werkzeugadapter mit Steilkegel in möglichst kurzer Bauweise zu schaffen, der eine einfache Handhabung erlaubt, Umbauten oder Ausbauten, z.B. Werkzeugspindel beim Werkzeugwechsel vermeidet und geeignet ist, den gesamten zur Verfügung stehenden axialen Weg der Spannzange für die Spannung des Adapters nutzbar zu machen.

Bei dem eingangs genannten Werkzeugadapter wird die Aufgabe dadurch gelöst, daß der Werkzeugadapter mindestens eine parallel zur Spannstange und über den Kegelschaft hinausragende federnde Zunge aufweist, die die Spannzange der Spindel so hinterfährt bzw. hinterfahren, daß die Spannzange beim Einsetzen des Adapters über den Kopf der Spannstange geschlossen bzw. in dieser Stellung des Adapters geschlossen gehalten wird. Die Erfindung geht also von dem neuen Gedanken aus, daß der bisher nicht nutzbare Weg der Spannzange durch zusätzliche Mittel nutzbar gemacht werden kann, ohne das hierzu große bauliche Veränderungen des Adapters erforderlich sind. Die federnde Zunge bzw. vorzugsweise die sich diametralisch gegenüberliegenden federnden Zungen hinterfahren die Spannzange beim Einführen des Adapters in die kegelige Aufnahmebohrung der Werkzeugmaschinenspindel, wobei diese Aufnahmebohrung gleichzeitig als starres Widerlager der federnden Zungen dient.

Vorzugsweise sind daher die federnden Zungen im unbelastetem Zustand zumindest an ihrem mit dem Adapterkegelschaft verbundenen Ende so am Adapter angeordnet, daß sie unter dem durch den Kegelschaft bestimmten Kegelwinkel aus dem Adapterkegelschaft austreten. Diese Ausbildung gewährleistet, daß die Zungen ohne Schwierigkeiten in die kegelige Aufnahmebohrung eingeführt werden können.

2

Die federnde Wirkung der Zungen wird noch dadurch erhöht, daß sie an ihrem freien Ende in Abweichung von dem genannten Kegelwinkel nach außen in radialer Richtung aufgebogen sind. Weiter optimiert wird die Anpreßwirkung der federnden Zungen auf die Spannzange dadurch, daß die freien Enden der federnden Zungen an ihrer der Spannzange zugewandten Seite der Außenform der Spannzange entsprechend geformt sind. Hierdurch kann auch gewährleistet werden, daß der Adapter bei gelösten Spannmitteln noch durch die federnden Zungen gehalten wird, wodurch die sichere Entnahme der verriegelten Einheit des Adapters mit einem Transportkopf verbessert wird.

Nach einer Weiterbildung der Erfindung sind die federnden Zungen nur an ihrer Ansatzstelle zum Adapterkegelschaft elastisch und im übrigen im wesentlichen biegesteif.

Um den Adapter bzw. den Adapter-Tragkörper leicht mit dem Transportkopf verriegeln zu können, weist der Adapter-Tragkörper einen axial verschiebbaren Riegel auf, der mit Exzenternocken eines Transportkopfes bei Spindeldrehung zusammenwirkende Ausnehmungen aufweist. Vorzugsweise ist der Adapter durch 45°-Drehung des Transportkopfes gegenüber dem Adapter in radialer Richtung spannbar bzw. lösbar.

In einer bevorzugten Ausführungsform ist der genannte Riegel durch eine Feder vorgespannt, die den Riegel radial nach außen treibt.

Die Spannstange des Adapters ist in einer koaxialen Hülse axial verschiebbar, der eine radiale Bohrung aufweist, durch welche bei gelöster bzw. nicht gespannter Spannstange Spannelemente, vorzugsweise Kugeln in Ausnehmungen eines Transport- oder Werkzeugkopfes tritt und dadurch die Verbindung zu dem Adapterkegelschaft herstellen.

Vorzugsweise liegen die Spannelemente bei gespannter Spannstange in Ausnehmungen der Spannstange und der Hülse. Als Spannelemente kommen insbesondere Kugeln oder Stifte in Frage. Eine einfach handhabbare Verbindung des Kegelschaftes mit der Hülse ist über einen Gewindestift möglich, der in eine entsprechende Bohrung eingeführt wird.

Zur Verbindung des Tragkörpers an dem Spindelkopf besitzt dieser axiale Bohrungen bzw. Gewindebohrungen zur Verschraubung an der Spindelkopfstirnfläche.

Um die der Werkzeugmaschinenspindel abgewandte Ring- und Anlagefläche für ein Transport- und/oder Werkzeugkopf vor Beschädigung zu schützen, ist die entsprechende Gegenfläche des Transportkopfes mit einem Kunststoffring überzogen.

Insbesondere ist eine über das verjüngte Ende des Kegelschaftes hinausragende, mit einem Kopf versehene Spannstange vorgesehen, die entgegen einer Federkraft im Werkzeugadapter axial verschiebbar ist.

Die Erfindung wird weiterhin anhand von Ausführungsbeispielen erläutert, die in den Zeichnungen dargestellt sind. Es zeigen:

Fig. 1 eine Querschnittsansicht eines mit einem Transportkopf verspannten Werkzeugmaschinenadapters,

Fig. 2 eine Querschnittsansicht einer Werkzeugmaschinenspindel mit kegeliger Aufnahmebohrung mit Spannzange und Ausstoßzapfen und

Fig. 3 eine alternative Ausführungsform des Adapters nach Fig. 1.

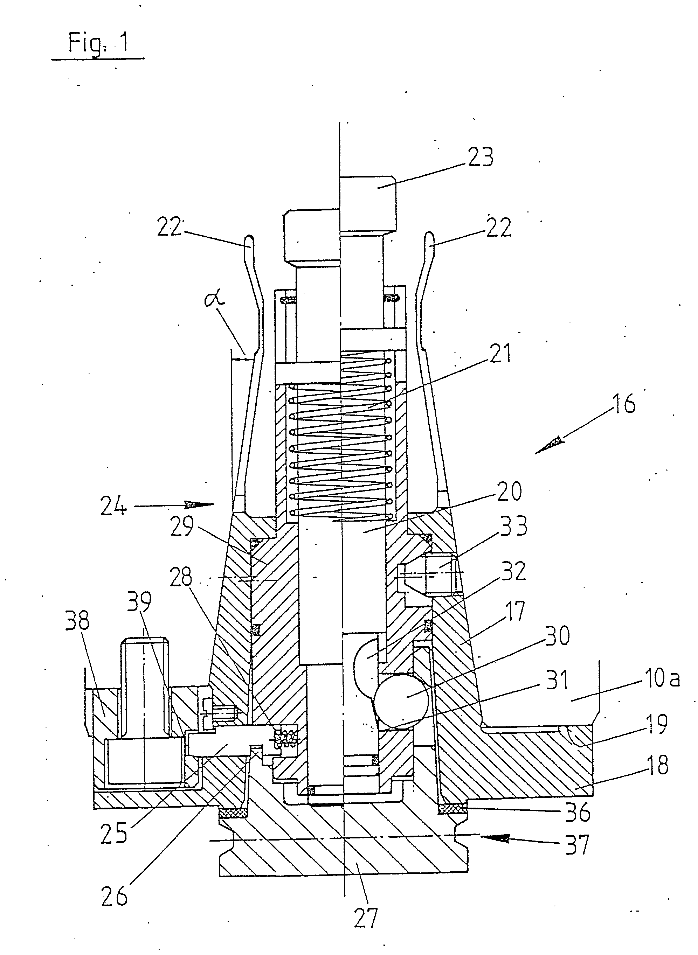

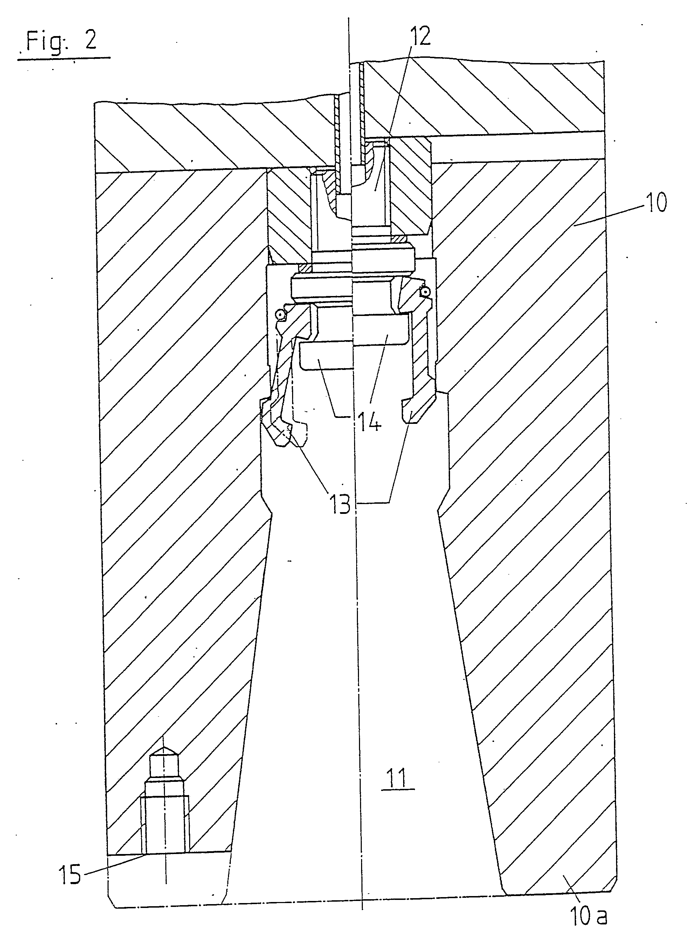

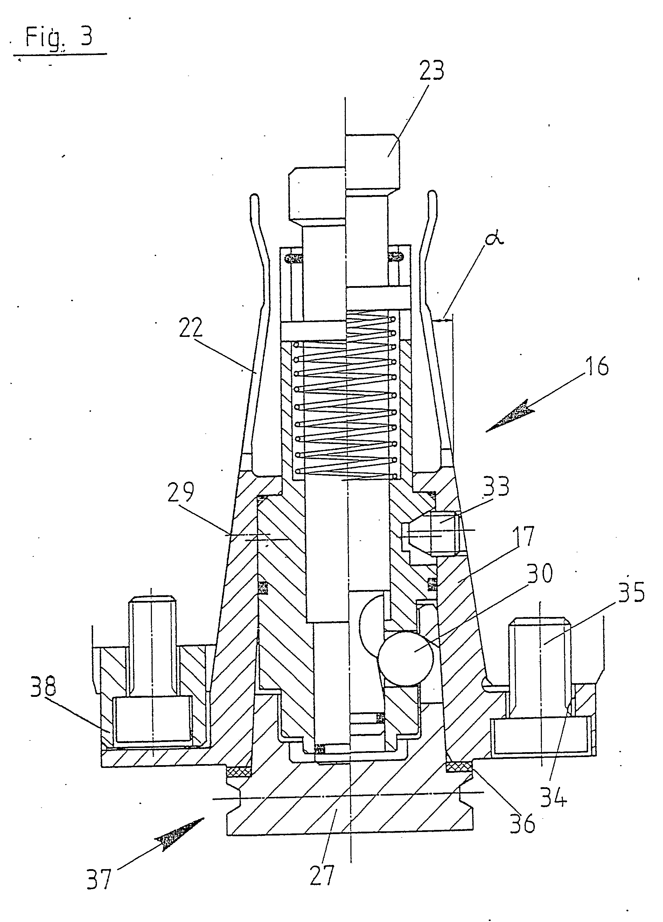

Der in Fig. 1 und 3 dargestellte Werkzeugadapter 16 ist zum Einschub und zur Verspannung in Werkzeugmaschinenspindeln 10 nach Fig. 2 mit einem Spindelkopf mit einer axialen Ringstirnfläche geeignet. Die Werkzeugmaschinenspindel 10 besitzt eine kegelige Aufnahmebohrung 11, in welche eine entgegen einer Federkraft verschiebbare Zugstange 12 mit einem endseitigen Ausstoßzapfen 14 hineinragt. Über die genannte Zugstange 12 ist ferner eine im Prinzip nach dem Stand der Technik bekannte Spannzange 13 betätigbar, wobei die beiden möglichen Stellungen eines Spannzangenarms in der linken Hälfte der Fig. 2 angedeutet sind. An der ringförmigen Stirnseite besitzt der Spindelkopf ferner noch eine Gewindebohrung zur Aufnahme einer Schraube, über die ein dort anlegbarer Adaptertragkörper befestigt werden kann.

Der Werkzeugadapter 16 ist im Detail in Fig. 1 dargestellt und besteht im wesentlichen aus einem Kegelschaft 17 sowie einem axial hierzu angeordneten ringförmigen Tragköper 18, der im eingesetzen Zustand mit der Stirnfläche 19 des Spindelkopfes zur Plananlage kommt.

Zur Spannung weist der Adapter eine zentrale axial in einer Hülse 29 bewegbare Spannstange 20 auf, die durch eine Feder 21 vorgespannt ist. Hierbei zeigt Fig. 1, rechte Bildseite, die Stellung der Spannstange und der Feder in verriegelter Stellung und die linke Bildseite eine entsprechende Spannmittelanordnung in gelöster Stellung. Entsprechendes gilt auch für die Darstellungen in Fig. 2 und 3.

Erfindungsgemäß sind am oberen Ende des Kegelschaftes 17 mehrere sich diametral gegenüberliegende federnde Zungen 22 angeordnet, deren freie Enden so ausgebildet sind, daß sie im in die kegelige Aufnahmebohrung der Spindel 10 eingesetzen Zustand die Arme der Spannzange 13 derart hinterfahren, daß diese über den ihr größtmöglichen axialen Weg nach innen gedrückt wird. Der Adapterkegelschaft 17 ist im vorliegenden Fall kegelstumpfförmig, wobei sie federnden Zungen 22 derart aus der Stirnseite des Kegelschaftes herausragen bzw. dort befestigt sind, daß die unter Bildung eines bündigen Abschlusses den Kegelwinkel α des Kegelschaftes 17 bzw. der Aufnahmebohrung 11 fortführen.

Die genannte Spannstange 20 des Adapters 16 ragt über das verjüngte Ende des Kegelschaftes 17 hinaus und ist endseitig mit einem Kopf 23 versehen, der in gespannter Stellung von den Armen der Spannzange 13 umfaßt wird. Es ist offensichtlich, daß die Qualität der Verspannung des Adapters 16 mit der Spindel 10 wesentlich davon abhängt, ob der größtmögliche radiale Schwenkweg von den Spannarmen 13 zurückgelegt wird.

Damit die Zungen federn können, ist die Ansatzstelle 24 der federnden Zungen 22 an der Stirnseite des Kegelschaftes 17 elastisch ausgebildet, während im übrigen die federnden Zungen biegesteif sein sollen.

Der Adapter 16 besteht zusätzlich aus einer Hülse 29, der in eine zentrale axiale Bohrung des Kegelschaftes 17 eingesetzt ist und mittels Gewindestifte 33 gehalten wird, die in entsprechende radiale Gewindebohrungen des Kegelschaftes 17 eingedreht sind. In dieser Hülse 29 ist die Spannstange 20 beweglich. Eine Verspannung der Spannstange mit der Hülse kann durch Vermittlung des Spannelementes 30 herbeigeführt werden. Wie bereits erwähnt, ist in Fig. 1 und 3 in der rechten Bildhälfte jeweils die verriegelte Stellung dargestellt. Hierbei wird die Ausnehmung 32 in der Spannstange deutlich, in welcher bei heruntergefahrener Spannstange 20 die Kugel 30 als Spannelement ruht. Durch Federdruck wird die Spannstange 20 nach oben bewegt, wobei die Kugel 30 radial nach außen in die Ausnehmung 31 in der Hülse fällt.

Zur Verspannung der Hülse und des Kegelschaftes kann ein Riegel 25 durch radiale Auswärtsbewegung in eine Bohrung 39 des Mitnehmersteines 38 benutzt werden. Der Riegel 25 ist durch eine in einer Sacklochbohrung der Hülse angeordnete Feder vorgespannt, die sie radial nach außen zu treiben sucht. Ferner ist der Riegel über einen Exzenternocken 26 eine Transportkopfes 27 führbar, wobei der Exzenternocken 26 des Transportkopfes 27 die Riegel 25 nach außen in die Bohrung 39 des Mitnehmersteins 38 gedrückt und positioniert werden.

In Fig. 3 ist eine alternative Befestigung des Werkzeugadapters 16 dargestellt: Der Werkzeugadapter wird mit Schrauben 35, die in Bohrungen 34 des Adapter-Tragkörpers 18 und die Gewindebohrungen 15 des Spindelkopfes 10a geschraubt sind gespannt. Um die Ringfläche des Adapters bei den 45° -Drehbewegungen der Spindel 10 vor Beschädigungen zu schützen, ist der Transportkopf 27 mit einem Kunststoffring 36 versehen, der beispielsweise aufgeklebt werden kann. Ferner besitzt der Transportkopf 27 noch eine nach dem Stand der Technik bekannte Greiferille 37.

Der erfindungsgemäße Adapter kann folgendermaßen benutzt werden:
Der Transportkopf 27 wird in den Steilkegeladapter 16 eingesetzt und durch das oben dargelegte Zusammenwirken der Hülse, der Spannstange 20, der Feder 21 und der Kugeln 30 für den Einbau über den nicht dargestellten Greifer in die Werkzeugmaschinenspindel 10 gespannt. Der Adapter 16 wird zusammen mit den Transportkopf 27 anschließend in die Spindel 10 eingesetzt. Die Spannstange 20 wird gegen den Ausstoßzapfen der Zustange 12 gedrückt und der Transportkopf gelöst (Fig. 1, linke Seite). Dabei wird der Adapter zuerst durch die federnden Zungen 22, welche die Spannzange 13 von außen hinterfahren, am Ende des Steilkegeladapters 16 axial gehalten. Der gesamte axiale Weg der Spannzange 13 wird dabei für die Spannung des Werkzeugadapters nutzbar gemacht (vgl. Fig. 2, gestrichelte Linie, linke Seite). Durch Drehung der Spindel um 45° werden über die Exzenternokken 26 des Transportkopfes 27 die Riegel 25 nach außen in die Bohrungen 39 der Mitnehmersteine 38 gedrückt und positioniert. Der Transportkopf 27 wird entnommen und im Werkzeugmagazin abgelegt. Für die Bearbeitung können nun im Magazin liegende Werkzeugköpfe aufgespannt werden. Die Spannung eines Werkzeugkopfes erfolgt dann über die Zugstange 12 der Werkzeugmaschinenspindel 10 mittels der Spannstange 20. Als Spannmittel für die Zugstange 12 dient ein nicht dargestelltes Tellerfederpaket. Der Löse- und Ausstoßvorgang vollzieht sich durch einen Hydraulikkolben, der die Zugstange 12 aus der Spindel 10 nach vorne bewegt und über die Spannstange 20 des Adapters 16 den Werkzeugkopf aus der kegeligen Aufnahmebohrung 11 abstößt. Der zuvor von der Greiferzange erfaßte Werkzeugkopf kann wieder ins Magazin zurückgebracht werden.

Die Entnahme des Adapters 16 aus der Werkzeugmaschinenspindel 10 geschieht in umgekehrter Reihenfolge. Mit dem nicht dargestellten Greifer wird der Transportkopf 27 in den Adapter 16 eingefahren. Durch Linksdrehung der Spindel von 45° werden die Riegel 25 über den Exzenterzapfen 26 des Transportkopfes 27 aus den Bohrungen 39 der Mitnehmersteine 38 entfernt. Der Ausstoßzapfen der Werkzeugmaschinenspindel 10 wird zurückgenommen, bis der Transportkopf 27 über die Feder 21, die Spannstange 20 und die Kugeln 30 gespannt ist. Der Adapter 16 mit dem gespannten Transportkopf 27 wird entnommen, wobei die Federkraft der Zungen 22 des Adapters 16 zu überwinden ist.

Der in Fig. 3 dargestellte Steilkegeladapter ist für einen manuellen Wechsel geeignet und kann von Hand eingesetzt und mit Schrauben 35 am Spindelkopf 10a befestigt werden. Auch hier ist der Adapter 16 mit federnden Zungen 22 ausgelegt, damit der Gesamthub der Werkzeugmaschinenspannzange 13 als Spannweg für den Adapter 16 nutzbar ist.

## Ansprüche

1. Werkzeugadapter (16) für eine Werkzeugmaschinenspindel (10) mit einer kegeligen Aufnahmebohrung (11) und mit einer in der Spindel (10) axial entgegen einer Federkraft verschiebbaren Zugstange (12), die eine am inneren Ende der Aufnahmebohrung vorgesehene Spannzange (13) und einen Ausstoßzapfen (14) trägt, wobei der Werkzeugadapter (16) einen der kegeligen Spindelaufnahmebohrung (11) angepaßten Kegelschaft (17) und einen hierzu koaxialen, an die Stirnflächen (19) der Spindeln (10) andrückbaren Tragkörper (18) aufweist und Angriffsflächen für eine Transportvorrichtung (27) eines automatischen Werkzeugwechslers und einer Werkzeugkopfaufnahme sowie Werkzeugkopfspannmitteln ausgestattet ist,
**dadurch gekennzeichnet,**
daß der Werkzeugadapter (16) mindestens eine parallel zur Spannstange (20) und über den Kegelschaft (17) hinausragende federnde Zunge (22) aufweist, die die Spannzange (13) der Spindel (10) so hinterfährt bzw. hinterfahren, daß die Spannzange (13) beim Einsetzen des Adapters (16) über den Kopf (23) der Spannstange (20) geschlossen bzw. in dieser Stellung des Adapters (16) geschlossen gehalten wird.

2. Werkzeugadapter nach Anspruch 1, dadurch gekennzeichnet, daß zwei federnde Zungen (22) vorgesehen sind.

3. Werkzeugadapter nach Anspruch 1 oder 2, dadurch gekennzeichnet, daß die federnden Zungen (22) im unbelastetem Zustand zumindest an ihrem mit dem Adapterkegelschaft (17) verbundenen Ende unter dem durch den Kegelschaft (17) bestimmten Kegelwinkel (α) aus dem Adapterkegelschaft (17) austreten.

4. Werkzeugadapter nach Anspruch 3, dadurch gekennzeichnet, daß die federnden Zungen (22) an ihrem freien Ende in Abweichung vom Kegelwinkel ( ) nach außen (in radialer Richtung) aufgebogen sind.

5. Werkzeugadapter nach einem der Ansprüche 3 oder 4, dadurch gekennzeichnet, daß die freien Enden der federnden Zungen (22) an ihrer der Spannzange (13) zugewandten Seite der Außenform der Spannzange (13) entsprechend geformt sind.

6. Werkzeugadapter nach einem der Ansprüche 1 bis 5, dadurch gekennzeichnet, daß die federnden Zungen (22) nur an ihrer Ansatzstelle (24) zum Adapterkegelschaft (17) elastisch und im übrigen im wesentlichen biegesteif sind.

7. Werkzeugadapter nach einem der Ansprüche 1 bis 6, dadurch gekennzeichnet, daß der Adapter-Tragkörper (18) mindestens einen radial verschiebbaren Riegel (25) aufweist, der mit Exzenternocken (26) eines Transportkopfes (27) bei Spindeldrehung, vorzugsweise um 45°, zusammenwirkende Ausnehmungen aufweist und in radialer Richtung lösbar bzw. spannbar ist.

8. Werkzeugadapter nach Anspruch 7, dadurch gekennzeichnet, daß der Riegel (25) durch eine Feder (28) vorgespannt ist.

9. Werkzeugadapter nach einem der Ansprüche 1 bis 8, dadurch gekennzeichnet, daß die Spannstange (20) in einer koaxialen Hülse (29) axial verschiebbar ist, die eine radiale Bohrung aufweist, durch welche bei gelöster nichtgespannter Spannstange (20) ein oder mehrere Spannelemente (30) in Ausnehmungen (31) eines Transport- oder Werkzeugkopfes (27) treten und dabei mit dem Adapter (16) verbunden sind.

10. Werkzeugadapter nach Anspruch 9, dadurch gekennzeichnet, daß das Spannelement (30) bei gespannter Spannstange in Ausnehmungen (31, 32) der Spannstange (20) und der Hülse (29) liegt.

11. Werkzeugadapter nach Anspruch 9 oder 10, dadurch gekennzeichnet, daß das Spannelement eine Kugel (30) order ein Stift ist.

12. Werkzeugadapter nach einem der Ansprüche 9 bis 11, dadurch gekennzeichnet, daß der Kanister (29) über mindestens einen Gewindestift (33) mit dem Kegelschaft (17) verbunden ist.

13. Werkzeugadapter nach einem der Ansprüche 1 bis 6 und 9 bis 12, dadurch gekennzeichnet, daß der Tragkörper (18) axiale Bohrungen zur Verschraubung an der Spindelkopfstirnfläche (19) aufweist.

14. Werkzeugadapter nach einem der Ansprüche 1 bis 13, dadurch gekennzeichnet, daß auf der der Werkzeugmaschinenspindel (10) abgewandten Rind- oder Anlagefläche für einen Transport- und/oder Werkzeugkopf ein Kunststoffring (36) ist.

15. Werkzeugadapter nach einem der Ansprüche 1 bis 14, gekennzeichnet durch eine über das verjüngte Ende des Kegelschaftes (17) hinausragende, mit einem Kopf versehene Spannstange (20), die entgegen einer Federkraft im Werkzeugadapter (16) axial verschiebbar ist.

Fig. 1

Fig. 2

Fig. 3